# EUROPÄISCHE PATENTSCHRIFT

(11) **EP 3 786 074 B1**
(45) Veröffentlichungstag und Bekanntmachung des Hinweises auf die Patenterteilung: **08.03.2023**
(21) Anmeldenummer: 20192918.9
(22) Anmeldetag: 26.08.2020
(51) Int. Cl.: B64G 1/40, F02K 9/50, F02K 9/60

(54) **ANTRIEBSSYSTEM FÜR EIN RAUMFAHRZEUG UND VERFAHREN ZUM BETREIBEN EINES RAUMFAHRZEUGS**
PROPULSION SYSTEM FOR A SPACECRAFT AND METHOD FOR OPERATING A SPACECRAFT
SYSTÈME DE PROPULSION POUR UN ENGIN SPATIAL ET PROCÉDÉ DE FONCTIONNEMENT D'UN ENGIN SPATIAL

(30) Priorität: 28.08.2019 DE 102019123057
(43) Veröffentlichungstag der Anmeldung: 03.03.2021
(73) Patentinhaber: Deutsches Zentrum für Luft- und Raumfahrt e.V., 51147 Köln (DE)
(72) Erfinder: Werling, Lukas, 70771 Leinfelden-Echterdingen (DE); Hörger, Till, 74245 Löwenstein (DE)
(74) Vertreter: Fleck, Julia Maria

(56) Entgegenhaltungen:
- FR-A1- 2 877 403
- US-A- 5 961 074
- US-A1- 2003 005 708
- US-A1- 2013 196 273
- US-A1- 2017 167 442
- US-A1- 2018 171 933
- US-B1- 7 784 269

## Beschreibung

Die Erfindung betrifft ein Antriebssystem für ein Raumfahrzeug, mit zumindest einer ersten Antriebsvorrichtung, die mit N₂O als Oxidator und mit einem Kohlenwasserstoff als Brennstoff betreibbar ist, einer ersten Tankvorrichtung umfassend zumindest einen ersten Speicherraum zur Speicherung des Oxidators und/oder Brennstoffes sowie einen ersten Druckraum zur Aufnahme eines Druckfluids zur Aufrechterhaltung eines Druckniveaus innerhalb des ersten Speicherraums, und einem zweiten Speicherraum zur Speicherung des Brennstoffes und/oder Oxidators, eine Entnahmeanordnung umfassend Leitungsmittel, mittels der der erste Speicherraum und der zweite Speicherraum mit der ersten Antriebsvorrichtung zur Versorgung mit Oxidator und/oder Brennstoff in Strömungsverbindung steht. Die Erfindung betrifft ferner ein Verfahren zum Betreiben des Antriebssystems.

Ein derartiges Antriebssystem für ein Raumfahrzeug ist in der US 2017/167442 A1 angegeben. Dabei sind Speicherräume für Brennstoff und Oxidator vorhanden, wobei der Brennstoff und der Oxidator mittels eines gasförmigen Druckfluids zur Antriebsvorrichtung gefördert wird. In einer Tankvorrichtung sind betreffende Druckräume für das mit Wärme beauftragte Druckfluid vorhanden.

Die US 5 961 74 A zeigt ebenfalls ein Antriebssystem für ein Raumfahrzeug mit zwei Speicherräumen für Brennstoff und Oxidator mit jeweiligen Druckräumen und eine Förderung mittels eines Druckfluids.

Ein weiteres Antriebssystem ist in der EP 3 199 792 A1 angegeben. Dabei wird zur Druckgasförderung des Brennstoffes und/oder Oxidators ein in einem Flüssigspeicher vorliegendes Bedrückungsgas in einen überkritischen Zustand überführt, in einem Gasspeicher zwischengespeichert und daraus jeweils einem Tank mit Distickstoffmonoxid (N₂O), auch bekannt als "Lachgas", und Brennstoff zu deren Bedrückung zugeführt.

Die US 2009/0007541 A1 zeigt ein Antriebssystem zum Betrieb mit N₂O mit zwei getrennten Tankeinrichtungen, wobei ein separates Druckgas oder mittels Selbstbedrückung zur Förderung genutzt wird.

Aus der US 2002/0092290 A1 ist ein Antriebssystem bekannt, wobei N₂O und ein Brennstoff jeweils in flüssigem Zustand dem jeweiligen Tank entnommen werden. Zur Sicherstellung von ausreichend hohen Drücken innerhalb der Tanks weist das System zusätzlich einen Stickstofftank zur Druckbeaufschlagung der Tanks auf.

In der US 2009/0133788 A1 sind vorgemischte Treibstoffe, sogenannte Monopropellants, enthaltend N₂O als Oxidator und einen organischen Brennstoff angegeben. Ein Antriebssystem zum Betrieb mit z. B. N₂O und einem organischen Brennstoff als Monopropellant ist in der US 2009/0007541 A1 gezeigt.

Die US 2018/0 171 933 A1 offenbart ein Bipropellant-Antriebssystem mit getrennten Oxidator- und Treibstofftanks, wobei z. B. Lachgas oder ein Kohlenwasserstoff (Methan, Propan) zum Einsatz kommen können. Die Einstellung eines Druckniveaus von Oxidator oder Brennstoff zur Förderung an die Antriebseinheit und dortiger Wärmeaufnahme erfolgt mittels einer Mikropumpe. Nach Wärmeaufnahme an der Antriebseinheit wird die jeweilige Komponente in den Tank zurückgeführt.

Die US 2010/0 218 482 A1 zeigt ein Bipropellant-System, bei dem eine Erwärmung zur Bedrückung innerhalb der Tankvorrichtungen mittels eines Kühlmittels erfolgt.

Weitere Bipropellant-Antriebssysteme sind in der US 2013/0 048 097 A1 und der US 5 823 478 A angegeben.

Die WO 2006/04854 3 zeigt eine Vorrichtung zur Versorgung eines Raketentriebwerks mit Kraftstoff und Oxidationsmittel, wobei in einem Tank Abteile, ein Abteil umfassend Oxidationsmittel und ein Abteil Treibstoff, und ein Druckbeaufschlagungsmittel mit einem Druckbehälter angeordnet sind.

Die US 2013/0 196 273 A1 zeigt einen Antrieb, der als Bipropellant-System betreibbar ist. Neben dem Haupttriebwerk weist der Antrieb eine Brennkammer auf, in der der Treibstoff zersetzbar und der Impuls des Abgases zum Antrieb nutzbar ist.

Weitere Antriebssysteme, zum Betrieb mit anderen Treibstoffen, sind in der US 4 802 333 A, US 6 272 846 B1, US 2015/0354503 A1, US 5 417 049 A, US 2016/0108855 A1, GB 2 293 627 A und DE195 45 728 A1 angegeben.

Der Erfindung liegt die Aufgabe zugrunde, ein Antriebssystem der eingangs genannten Art mit erhöhter Effizienz sowie ein entsprechendes Verfahren zum Betreiben des Antriebssystems bereitzustellen.

Die Aufgabe wird für das Antriebssystem mit den Merkmalen der Ansprüche 1 und 2 und für das Verfahren mit den Merkmalen des Anspruchs 10 gelöst. Bei dem Antriebssystem ist vorgesehen, dass in thermischer Wirkverbindung mit dem (insbesondere innerhalb des) ersten Druckraum(s) zumindest eine Wärmeeintragungseinrichtung zum Eintrag von Wärme in das Druckfluid angeordnet ist.

Der erste Druckraum ist mit dem ersten Speicherraum zur Druckgasförderung des Oxidators und/oder Brennstoffes in (mechanischer) Wirkverbindung stehend angeordnet. Durch diese Ausbildung ist im Betrieb über den Wärmeeintrag das Druckniveau (d. h. der Druck bzw. der Druckbereich) innerhalb des Druckraums und, aufgrund der Wirkverbindung zwischen dem Druckraum und dem Speicherraum, das Druckniveau in dem Speicherraum steuerbar bzw. regelbar. So ist, gegebenenfalls auch mittels eines oder mehrerer zusätzlicher Regelventile in der Entnahmeanordnung, der Mengenstrom (d. h. Volumen- bzw. Massenstrom) an Oxidator bzw. Brennstoff einstellbar, wodurch wiederum davon abhängige Größen, wie der Schub des Triebwerks und/oder das Mischungsverhältnis zur Einstellung der Verbrennungstemperatur, steuerbar bzw. regelbar sind. Beispielsweise kann insbesondere während des stationären Betriebs der Druck in dem/den Speicherraum/-räumen konstant gehalten werden. Das Druckniveau entspricht vorzugsweise zumindest einem erforderlichen Förderdruck bzw. Förderdruckbereich zur Treibstoffförderung in die Antriebsvorrichtung. Vorzugsweise sind zur Steuerung bzw. Regelung zusätzlich eine Steuereinrichtung und entsprechende Sensoren, insbesondere Druck- und Temperatursensoren an der Tankvorrichtung, insbesondere in dem Speicherraum und/oder dem Druckraum, vorhanden. So ist ein platz- und bauteileoptimiertes Antriebssystem bzw. Triebwerk erhältlich, welches mit geringem Aufwand effizient betreibbar ist.

Erfindungsgemäß umfasst die Wärmeeintragungseinrichtung zumindest eine Wärmetauscheinrichtung.

Dabei ist die Wärmetauscheinrichtung in einem Wärmetauscherkreislauf des Antriebssystems angeordnet, wobei die Wärmetauscheinrichtung mit der Antriebsvorrichtung als Wärmequelle in thermische Verbindung gebracht oder bringbar ist. So kann die durch die Antriebsvorrichtung erzeugte Abwärme vorteilhaft in das Antriebssystem reintegriert werden. Dies führt zu einer höheren Effizienz des Gesamtsystems.

Dabei ist der Wärmetauscherkreislauf derart ausgebildet, dass die Wärmetauscheinrichtung von Brennstoff und/oder Oxidator als Wärmeträgerfluid durchströmbar ist. So kann vorteilhaft auf ein separates Wärmeträgerfluid verzichtet werden, wodurch z. B. Gewicht eingespart und die Systemkomplexität reduziert werden kann. Der Mengenstrom an Brennstoff bzw. Oxidator kann ebenfalls mittels des Druckniveaus innerhalb des Speicherraums bzw. der Speicherräume und vorzugsweise weiteren Stellmitteln (z. B. Ventilvorrichtungen, Blenden) geregelt werden, ohne Vorhandensein einer (separaten) Fördereinrichtung. Diese Ausbildung ist insbesondere in Kombination mit einer Regenerativkühlung der Antriebsvorrichtung durch Brennstoff und/oder Oxidator vorteilhaft, wobei Brennstoff und/oder Oxidator durch eine Kühleinrichtung in thermischer Verbindung zu der Antriebsvorrichtung geleitet werden und diese so kühlen bzw. selbst erwärmt werden. Die aufgenommene Abwärme wird dann über die Wärmetauscheinrichtung/en innerhalb der Tankvorrichtung/en abgegeben.

Für eine gute Einstellbarkeit des Wärmeeintrags umfasst der Wärmetauscherkreislauf entsprechend angeordnete Leitungsmittel und/oder zumindest ein Stellmittel, mittels dessen bzw. derer die Wärmetauscheinrichtung von einem steuerbaren und/oder regelbaren Anteil an Brennstoff und/oder Oxidator durchströmbar ist. Der andere Anteil wird z. B. stromab der Kühleinrichtung zur Regenerativkühlung direkt zu der Antriebsvorrichtung geleitet. Als Stellmittel stromauf der Wärmetauscheinrichtung/en (stromab der Kühleinrichtung einer Regenerativkühlung) kann beispielsweise vorteilhaft eine Blende verwendet werden. Diese weist gegenüber hohen Temperaturen, die das Wärmeträgerfluid aufweist, eine geringere Empfindlichkeit auf als z. B. ein Regelventil. Dabei wird der gesamte Massenstrom mittels eines (weiteren) Stellmittels (z. B. eines Mengenstromreglers) innerhalb der Entnahmeleitung/en eingestellt und das Verhältnis der Anteile durch die Wärmetauscheinrichtung/en mittels z. B. der Blende gesteuert bzw. geregelt. So kann sowohl der erforderliche Mengenstrom sowohl durch die Wärmetauscheinrichtung/en als auch an die Antriebsvorrichtung sichergestellt werden.

Für eine weiter verbesserte, individuelle Einstellbarkeit des Mengenstroms und damit des Wärmeeintrags in die Druckräume ist in dem Wärmetauscherkreislauf ein Regelventil, insbesondere stromab der Wärmetauscheinrichtung, angeordnet. Durch die Anordnung stromab kann ein (kostengünstigeres), nicht hochtemperaturfestes Regelventil verwendet werden. Durch das Vorhandensein des Regelventils ist die Steuerung bzw. Regelung derart präzise einstellbar, dass z. B. auf eine zusätzliche Heizeinrichtung bei der Wärmeeintrageinrichtung auch verzichtet werden kann. Ein auftretender kurzer Druckabfall während der Startphase aufgrund zunächst fehlender Abwärmeerzeugung der Antriebsvorrichtung kann ausreichend schnell ausgeglichen werden, um den Betrieb aufrecht zu erhalten. Denkbar ist bei dieser Variante auch ein Verzicht auf ein Regelventil der bzw. den Entnahmeleitung/en.

In einer alternativen, einfach steuer- bzw. regelbaren Ausbildungsvariante ist der Wärmetauscherkreislauf von der Entnahmeanordnung strömungsmechanisch entkoppelt ausgebildet, wobei zur Wärmeauskopplung aus dem Brennstoff und/oder Oxidator eine Wärmetauscheinrichtung in dem Wärmetauscherkreislauf angeordnet ist. Zur Förderung des Wärmeträgerfluids ist vorzugsweise eine zusätzliche Fördereinrichtung vorhanden.

In einer einfachen, robusten Ausbildungsvariante umfasst die Wärmeeintragungseinrichtung zumindest eine Heizeinrichtung. Diese kann auch zusätzlich zu der Wärmetauscheinrichtung vorhanden sein, so dass die Wärmeeintragungseinrichtung sowohl die Wärmetauscheinrichtung als auch die Heizeinrichtung umfasst. Insbesondere durch die Kombination ist eine große Bandbreite an Schubbereichen durch die Antriebsvorrichtung bereitstellbar, unabhängig von deren Abwärme, was insbesondere während der Startphase Vorteile bringt.

Zweckmäßigerweise ist die Heizeinrichtung zum Betrieb mit elektrischer Energie und/oder nuklearer Energie ausgebildet.

In einer einfach zu gestaltenden Ausbildungsvariante ist eine zweite Tankvorrichtung vorhanden, in welcher der zweite Speicherraum und ein zweiter Druckraum zur Aufnahme eines Druckfluids zur Aufrechterhaltung eines Druckniveaus innerhalb des zweiten Speicherraums angeordnet sind.

Alternativ kann der zweite Speicherraum (zusammen mit dem ersten Speicherraum) innerhalb der ersten Tankvorrichtung angeordnet sein, wobei der erste Druckraum sowohl zur Aufrechterhaltung des Druckniveaus innerhalb des ersten Speicherraums als auch des zweiten Speicherraums angeordnet und ausgebildet ist. Auf diese Weise kann Tankstruktur und somit Masse eingespart werden, was die Gesamteffizienz des Antriebssystems verbessern kann.

Weiterhin kann Masse dadurch eingespart werden, dass zumindest einer der Speicherräume einen der Druckräume bildet. Somit befinden sich zwei Speicherräume innerhalb der Tankvorrichtung, wobei auf einen separaten Druckraum verzichtet wird, was eine Bauraumeinsparung von z. B. 20 % bis 25 % bewirken kann. Vorzugsweise ist der Speicherraum zur Aufnahme der Treibstoffkomponente mit dem höheren Dampfdruck zur Bedrückung des Speicherraums zur Aufnahme der Treibstoffkomponente mit dem niedrigeren Dampfdruck ausgebildet, d. h. dieser umfasst die Wärmeeintragungseinrichtung. Da es insbesondere bei der zu bedrückenden Treibstoffkomponente zu einer Zweiphasenströmung bei Entnahme aus der Tankvorrichtung kommen kann, ist vorzugsweise zusätzlich eine Heizvorrichtung in der Entnahmeleitung der entsprechenden Treibstoffkomponente vorhanden. Zusätzlich oder alternativ kann zur Vergleichmäßigung und/oder Verdampfung innerhalb der Entnahmeleitung ein erhöhter Druckverlust, beispielsweise mittels eines vorhandenen Stellmittels, erzeugt werden.

Alternativ (oder zusätzlich) kann, in einer dem gegenüber einfacher zu steuernden bzw. zu regelnden Ausbildungsvariante, zumindest ein (separater) Druckraum zusätzlich zu den Speicherräumen vorhanden sein. Der Druckraum ist vorzugsweise in Wirkverbindung mit beiden Speicherräumen, beispielsweise mittig zwischengeordnet und von denselben zumindest teilweise umgeben, angeordnet.

Eine teileoptimierte Ausbildung ergibt sich, wenn innerhalb der ersten und/oder der zweiten Tankvorrichtung der jeweilige Druckraum von dem Speicherraum mittels einer elastisch-flexiblen Trennvorrichtung, insbesondere einer Membran, fluiddicht getrennt ist. Auf diese Weise kann sich eine Druck- und damit einhergehende Volumenänderung innerhalb des Druckraums auf den Speicherraum auswirken, so dass eine (mechanische) Wirkverbindung hergestellt ist. Auf zusätzliche strömungsregulierende Komponenten, z. B. einen Druckminderer, zwischen dem Druckraum und dem Speicherraum kann verzichtet werden, was die Systemkomplexität reduziert und Gewichtsvorteile bringt.

Für einen zuverlässigen, gleichmäßigen Betrieb der Antriebsvorrichtung kann es vorteilhaft sein, wenn mit zumindest einer der Entnahmeleitungen eine Heizeinrichtung in thermischer Wirkverbindung angeordnet ist. Die Heizeinrichtung kann z. B. zur Nachverdampfung einer der Treibstoffkomponenten, insbesondere während der Startphase, verwendet werden.

Vorzugsweise ist, bei dem betriebsbereiten Antriebssystem, das Druckfluid durch Kohlendioxid und/oder durch eine der Treibstoffkomponenten Brennstoff oder Oxidator gebildet. In Kombination mit N₂O und einem Kohlenwasserstoff als Treibstoffkomponenten ergibt sich der Vorteil, dass der Dampfdruck von CO₂ etwas höher als der Dampfdruck von N₂O und deutlich höher als der Dampfdruck von beispielsweise Ethan liegt (bei 20 °C: CO₂ rund 57 bar, N₂O rund 50 bar, Ethan rund 38 bar). So kann bei der Bedrückung zumindest ein Teil des Druckfluids flüssig in dem (jeweiligen) Druckraum vorliegen, wodurch dessen Volumen im Vergleich zur Verwendung eines (rein) gasförmigen Druckfluids entsprechend geringer ausgelegt werden kann.

In einer vorteilhaften Ausbildungsvariante ist zumindest eine weitere Antriebsvorrichtung, insbesondere umfassend einen Kaltgasantrieb und/oder einen katalytischen Antrieb, vorhanden. Vorzugsweise ist diese weitere Antriebsvorrichtung bzw. sind die weiteren Antriebsvorrichtungen von Oxidator oder Brennstoff durchströmbar in der bzw. den Entnahmeleitung/en angeordnet, beispielsweise innerhalb einer daraus abgezweigten Leitung unter Vorschaltung eines (Mengenstrom-)Regelventils. Vorzugsweise ist die weitere Antriebsvorrichtung für kleinere Schübe ausgelegt, z. B. gleich oder kleiner als 10 % der Leistung der (ersten) Antriebsvorrichtung umfassend eine Brennkammer. Auf diese Weise kann zum einen der Schubbereich vergrößert und damit die Flexibilität des Antriebssystems erhöht werden. Weiterhin kann die zusätzliche Antriebsvorrichtung z. B. zu einer definierten Entnahme der Treibstoffkomponente/n beitragen: Bei einer zweiphasigen Treibstoffkomponente innerhalb eines Speicherraums kann das Gemisch aufgrund der nicht vorhandenen Schwerkraft im Weltraum ungerichtet in den Speicherräumen vorliegen. Bei der Entnahme kann nun eine Zweiphasenströmung in die Entnahmeleitung und darüber in die Antriebsvorrichtung gelangen, was zu Betriebsstörungen oder Zerstörung der Antriebsvorrichtung führen kann: Schwankungen im Massenstrom können zu Instabilitäten innerhalb des Triebwerks führen, welche dieses beschädigen oder zerstören können. Für eine definierte Entnahme kann zunächst jeweils ein für den Betrieb der weiteren Antriebsvorrichtung erforderlicher (geringer) Mengenstrom des Oxidators und/oder des Brennstoffes in der (oder den) weiteren Antriebsvorrichtung/en entspannt werden. Dies führt zum Absetzen des flüssigen Teils der jeweiligen Treibstoffkomponente innerhalb der Speicherräume entgegen der Richtung der Schubkraft bzw. entgegen der Beschleunigungsrichtung, die die Schubkraft bewirkt. Bei einer entsprechend in Relation zu der bzw. den Antriebsvorrichtung/en angeordneten Entnahmestelle an dem jeweiligen Speicherraum kann nun gezielt die jeweilige Treibstoffkomponente flüssig oder, bei entsprechend anderer Anordnung, gasförmig entnommen werden.

Vorteilhafte Ausführungsvarianten des Verfahrens sind sinngemäß in Zusammenhang mit den Ausführungsvarianten des Antriebssystems beschrieben und weiterhin in den von dem Verfahrensanspruch abhängigen Ansprüchen angegeben.

Eine effiziente Verfahrensvariante sieht vor, dass das Druckfluid innerhalb des Drucktanks zumindest zeitweise zumindest teilweise in flüssigem Aggregatszustand vorliegt.

Ein flexibler Betrieb wird ermöglicht, wenn der Brennstoff und/oder der Oxidator flüssig oder gasförmig aus dem jeweiligen Speicherraum entnommen wird/werden. Mittels entsprechender Verfahrensführung stromab der Speicherräume, z. B. (Nach-) Verdampfung, lässt sich ein definierter Aggregatszustand an der Antriebsvorrichtung sicherstellen. Eine definierte Entnahme in flüssigem und/oder gasförmigem Aggregatszustand ist z. B. mithilfe von (weiteren) Antriebsvorrichtungen für kleine Schübe (z. B. gleich oder kleiner als 10 % der (ersten) Antriebsvorrichtung mit Brennkammer, d. h. z. B. mit einer Schubklasse zwischen 0,1 N und 30 N, insbesondere zwischen 1 N und 22 N) zu realisieren. Es können auch gezielt Brennstoff und/oder Oxidator mittels der Wärmeeintragungseinrichtung derart erwärmt werden, dass sie gasförmig über eine Injektorvorrichtung in eine Brennkammer der Antriebsvorrichtung einströmen. Bei Vorhandensein unterschiedlicher Komponenten in der Wärmeeintragungseinrichtung, z. B. der Heizeinrichtung und der Wärmeübertragungseinrichtung, können diese entsprechend optimiert aufeinander abgestimmt verwendet werden.

Beispielsweise kann vorteilhaft zumindest in einer Startphase eine Heizeinrichtung der Wärmeeintragungseinrichtung zum Wärmeeintrag verwendet werden. Z. B. kann im stationären Betrieb, bei Vorhandensein von (definierter) Abwärme der Antriebsvorrichtung, energiesparend die Antriebsvorrichtung als Wärmequelle genutzt werden.

Eine definierte Entnahme der Treibstoffkomponenten in flüssigem oder gasförmigem Zustand kann dadurch bewerkstelligt werden, dass zunächst ein Anteil von Brennstoff und/oder Oxidator in einer weiteren Antriebsvorrichtung zum Antrieb verwendet wird, insbesondere in einem Kaltgasantrieb entspannt oder in einem katalytischen Triebwerk zersetzt wird, und anschließend Brennstoff und/oder Oxidator für die Antriebsvorrichtung entnommen wird. Durch den Ausstoß des Treibstoffs bzw. des Abgases wird eine kleine Schubkraft erzeugt, die eine Beschleunigung hervorruft - hierdurch setzt sich der flüssige Oxidator und/oder Brennstoff an dem der Beschleunigungsrichtung entgegenliegenden Ende der Tankvorrichtung ab und der gasförmige Brennstoff und/oder Oxidator an dem diesem Ende gegenüberliegenden Ende. Je nach Anordnung der Entnahmeeinrichtung kann der Brennstoff und/oder Oxidator gezielt gasförmig und/oder flüssig entnommen werden.

Nachfolgend wird die Erfindung anhand von Ausführungsbeispielen unter Bezugnahme auf die Zeichnungen näher erläutert. Es zeigen:
- Fig. 1: ein Fließschema eines nicht beanspruchten Antriebssystems umfassend zwei Tankvorrichtungen, mit einer Wärmeeintragungseinrichtung in einem ersten Druckraum umfassend eine Heizeinrichtung,
- Fig. 2: ein Fließschema einer weiteren Ausführungsvariante des Antriebssystems gemäß Fig. 1, mit der Wärmeeintragungseinrichtung umfassend eine Wärmetauscheinrichtung in einem Wärmetauscherkreislauf,
- Fig. 3: ein Fließschema einer weiteren Ausführungsvariante des Antriebssystems gemäß Fig. 2, mit der Wärmeeintragungseinrichtung umfassend die Wärmetauscheinrichtung sowie die Heizeinrichtung,
- Fig. 4: ein Fließschema einer weiteren Ausführungsvariante des Antriebssystems gemäß Fig. 3, mit der Wärmeeintragungseinrichtung umfassend zwei zusätzliche, in dem Wärmetauscherkreislauf angeordnete Stellmittel,
- Fig. 5: ein Fließschema einer weiteren Ausführungsvariante des Antriebssystems gemäß Fig. 4, wobei der Wärmetauscherkreislauf strömungsmechanisch von einer Entnahmeanordnung entkoppelt ist,
- Fig. 6: ein Fließschema einer weiteren nicht beanspruchten Ausführungsvariante des Antriebssystems, mit einer Tankvorrichtung umfassend zwei Speicherräume, wobei der Druckraum durch einen der Speicherräume gebildet ist,
- Fig. 7: ein Fließschema einer weiteren Ausführungsvariante des Antriebssystems gemäß Fig. 6, mit der Wärmeeintragungseinrichtung umfassend die Heizeinrichtung und die Wärmetauscheinrichtung,
- Fig. 8: ein Fließschema einer weiteren nicht beanspruchten Ausführungsvariante des Antriebssystems, mit zwei Tankvorrichtungen jeweils ohne separaten Druckraum, wobei die Speicherräume ohne mechanische Trennung die Druckräume bilden,
- Fig. 9: ein Fließschema einer weiteren nicht beanspruchten Ausführungsvariante des Antriebssystems, mit einer Tankvorrichtung umfassend zwei Speicherräume und einen separaten Druckraum, und
- Fig. 10: ein Fließschema einer weiteren Ausführungsvariante des Antriebssystems gemäß Fig. 9, mit einem strömungsmechanisch von der Entnahmeanordnung entkoppelten Wärmetauscherkreislauf.

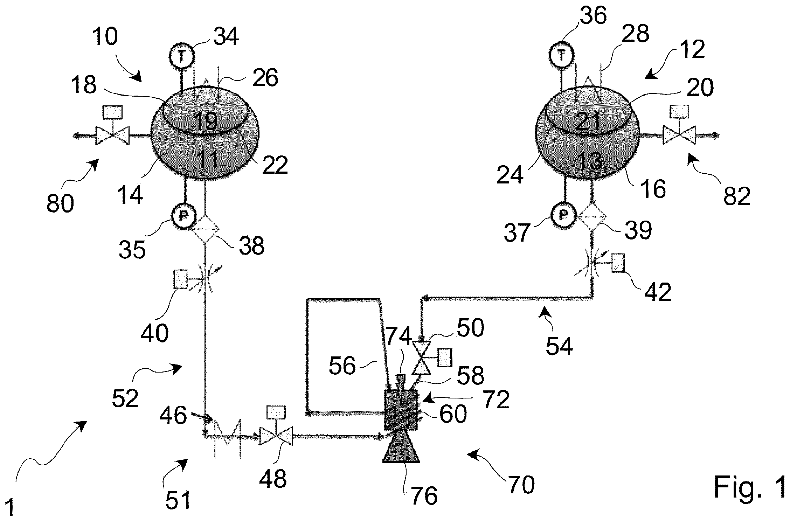

Fig. 1 zeigt ein Fließschema eines Antriebssystems 1 als Triebwerk eines Raumfahrzeugs und/oder eines (künstlichen) Satelliten umfassend eine erste Antriebsvorrichtung 70. Die Antriebsvorrichtung 70 ist zum Betrieb mit den Treibstoffkomponenten Lachgas (N₂O) als Oxidator 11 und einem Kohlenwasserstoff, z. B. Ethan (C₂H₆), als Brennstoff 13, unter deren Verbrennung ausgebildet. Der verwendete Kohlenwasserstoff weist insbesondere einen Dampfdruck von mehr als 10 bar bei Raumtemperatur (20 °C) auf.

Für den Betrieb umfasst die Antriebsvorrichtung 70 eine entsprechend ausgebildete Brennkammer 72 mit einer (hier nicht gezeigten) Injektorvorrichtung, eine Zündeinrichtung 74 und eine Düse 76 zur Schuberzeugung. Alternativ zu der Zündeinrichtung 74 kann ein zur katalytischen Zersetzung von N₂O geeigneter Katalysator vorhanden sein (hier nicht gezeigt), mittels dessen N₂O zur Zündung katalytisch zersetzt wird. Dazu wird der Katalysator auf mindestens etwa 350 °C beheizt, um einen exothermen Zerfall des N₂O zu bewirken. Der Brennstoff 13 wird dann bevorzugt, zur Vermeidung eines Überhitzens des Katalysators, stromab des Katalysators hinzugefügt.

Das Antriebssystem 1 umfasst ferner eine Treibstoff-Versorgungsanordnung der Antriebsvorrichtung 70 zum getrennten Zubringen der Treibstoffkomponenten an die Injektorvorrichtung. Die Versorgungsanordnung ist aufgrund ihrer nachfolgend beschriebenen Ausbildung optimiert für die Versorgung der Antriebsvorrichtung 70 mit N₂O und Kohlenwasserstoff als Treibstoffkomponenten.

Zum Zwecke der Treibstoffversorgung umfasst die Versorgungsanordnung zwei Tankvorrichtungen 10, 12 zur getrennten Speicherung von Oxidator 11 und Brennstoff 13. Die Tankvorrichtungen 10, 12 sind vorzugsweise bauraumoptimiert, insbesondere nicht thermisch isoliert zur Speicherung eines kryogenen Mediums ausgebildet, sondern unter Umgebungstemperaturen nutzbar. In der ersten Tankvorrichtung 10 befindet sich ein Speicherraum 14 zur Aufnahme des Oxidators 11. In der zweiten Tankvorrichtung 12 befindet sich ein zweiter Speicherraum 16 zur Aufnahme des Brennstoffes 13. Die Tankvorrichtungen 10, 12 umfassen jeweils Fluidein-/Auslässe 80, 82 zur jeweils getrennten Einbringung von Oxidator 11 und Brennstoff 13 und/oder zur Entlüftung und/oder Entlastung der Tankvorrichtungen 10, 12. Bei der Entlüftung von Brennstoff und/oder Oxidator am Lebensende eines Satelliten oder Raumfahrzeugs, dem sogenannten "decommissioning", wobei die Fluidein-/Auslässe 80, 82 verwendbar sind, lässt sich der Satellit oder das Raumfahrzeug in einen sicheren Zustand überführen.

Innerhalb der Tankvorrichtungen 10, 12 befindet sich zusätzlich zu den Speicherräumen 14, 16 und mit denselben in Wirkverbindung stehend weiterhin jeweils ein (separater) Druckraum 18, 20 zur Aufnahme eines Druckfluids 19, 21. Das Druckfluid 19, 21, oder auch Bedrückungsgas, dient im Betrieb zur Aufrechterhaltung eines bestimmten Druckniveaus (d. h. eines Drucks bzw. Druckbereiches) innerhalb der Speicherräume 14, 16. Das Druckniveau kann z. B. zumindest einem zur Förderung der Treibstoffkomponenten benötigten Förderdruck entsprechen.

Eine bauraummoptimierte Ausbildungsvariante der Tankvorrichtungen 10, 12 sieht dabei vor, dass die beiden Druckräume 19, 21 innerhalb der Tankvorrichtungen 10, 12 in demselben Gesamtraum wie die Speicherräume 14, 16 angeordnet sind und mit den Speicherräumen 14, 16 jeweils mittels einer elastisch-flexiblen Trennvorrichtung 22, 24 in mechanischer Wirkverbindung stehen. Die Trennvorrichtungen 20, 24 können insbesondere als Membranen ausgebildet sein. Die Trennvorrichtungen 22, 24 bewirken eine fluiddichte Trennung zwischen den Druckräumen 18, 20 und den Speicherräumen 14, 16. Die Trennvorrichtungen 22, 24 dehnen sich bei Volumenvergrößerung der Druckfluide 19, 21 unter Vergrößerung der Druckräume 18, 20 mechanisch aus und bewirken so eine Verkleinerung der Speicherräume 14, 16.

Das Druckfluid 19, 21 kann durch Kohlendioxid (CO₂) gebildet sein. In Kombination mit den hier verwendeten Treibstoffkomponenten ergibt sich der Vorteil, dass der Dampfdruck von CO₂ in einem ähnlichen Bereich (bzw. etwas höher) wie der Dampfdruck von N₂O oder beispielsweise Ethan als Kohlenwasserstoff liegt (bei 20 °C: CO₂ rund 57 bar, N₂O rund 50 bar, Ethan rund 38 bar). So kann bei der Bedrückung zumindest ein Teil des Druckfluids 19, 21 flüssig in den jeweiligen Druckräumen 19, 21 vorliegen, wodurch sich das Volumen der Druckräume 18, 20 im Vergleich zur Verwendung eines (rein) gasförmigen Druckfluids 19, 21 reduziert. Möglich ist jedoch auch die Verwendung eines anderen Druckfluids 19, 21, beispielsweise Helium oder Stickstoff.

Weiterhin umfasst das Antriebssystem 1 bzw. die Versorgungsanordnung eine Entnahmeanordnung 51 mit Leitungsmitteln zur Entnahme der Treibstoffkomponenten und deren Leitung an die Antriebsvorrichtung 70. Dabei wird im Betrieb der Oxidator 11 mittels einer Entnahmeleitung 52 der Entnahmeanordnung 51 aus dem ersten Speicherraum 14 entnommen. Der Brennstoff 13 wird mittels einer Entnahmeleitung 54 der Entnahmeanordnung 51 aus dem zweiten Speicherraum 16 entnommen. In den Entnahmeleitungen 52, 54 sind jeweils stromab der Speicherräume 14, 16 zunächst Filtervorrichtungen 38, 39 angeordnet. Stromab der Filtervorrichtungen 38, 39 sind Stellmittel 40, 42 vorhanden. Dies sind insbesondere Regelventile zur Veränderung des Querschnitts der Entnahmeleitungen 52, 54 zur Mengenstromregelung und damit Schubregelung bzw. Regelung des Mischungsverhältnisses innerhalb der Antriebsvorrichtung 70.

Zur Steuerung bzw. Regelung umfasst das Antriebssystem 1 eine Steuereinrichtung (hier nicht gezeigt), die mit Messmitteln, z. B. Sensorvorrichtungen 34 bis 37, und/oder zu steuernden Komponenten des Antriebssystems 1, z. B. den Stellmitteln 40, 42, in Datenübertragungsverbindung steht.

Innerhalb der Entnahmeleitung 52 ist zur Entnahme des Oxidators 11 weiterhin eine, z. B. elektrisch betreibbare, Heizeinrichtung 46 angeordnet. Dies ist insbesondere vorteilhaft, wenn die (hier nicht gezeigte) Injektorvorrichtung zum Betrieb mit gasförmigem Treibstoff ausgebildet ist. Die Heizeinrichtung 46 dient im Betrieb zur (Nach-) Verdampfung etwaiger flüssiger Bestandteile in dem Oxidatorstrom. Vorteilhafterweise kann insbesondere während einer Startphase der Antriebsvorrichtung 70 die Heizeinrichtung 46 zugeschaltet werden, um einen Gasphasenstrom an Oxidator 11 zu erzeugen. Während eines stationären Betriebs wird der Oxidator 11 innerhalb einer Kühleinrichtung 60 vollständig verdampft. So ist gewährleistet, dass sowohl in der Startphase als auch im stationären Betrieb stets gasförmiger Oxidator 11 an der Injektorvorrichtung vorliegt.

In den Entnahmeleitungen 52, 54 befindet sich weiterhin jeweils ein Stellmittel 48, 50, welches z. B. als Auf-/Zuventil und/oder als Mengenstromregler ausgebildet ist.

Die Entnahmeleitung 52 ist gemäß einer vorteilhaften Ausbildungsvariante stromab des Stellmittels 48 zur Regenerativkühlung der Antriebsvorrichtung 70 ausgebildet. Dabei ist die Entnahmeleitung 52 als Kühleinrichtung 60 in thermischem Kontakt zu der Düse 76 und/oder der Brennkammer 72, zur Kühlung derer Umfangswandungen, angeordnet. Auf diese Weise kann der Oxidator 11 bei der Verbrennung entstehende Abwärme von der Antriebsvorrichtung 70 aufnehmen. Hierbei kann zudem gegebenenfalls in der Flüssigphase vorliegender Oxidator 11 vor Einbringung in die Brennkammer 72 vollständig verdampft werden. Möglich wäre auch eine Ausbildung der Regenerativkühlung unter (zusätzlicher oder alternativer) Verwendung der Entnahmeleitung 54 und des Brennstoffes 13.

Stromab der Kühleinrichtung 60 geht die Entnahmeleitung 52 in einen Zufuhrabschnitt 56 über, der in die Antriebsvorrichtung 70 mündet. Die Entnahmeleitung 54 geht stromab des Stellmittels 50 in einen Zufuhrabschnitt 58 über, der in die Antriebsvorrichtung 70 mündet.

Für die Förderung der Treibstoffkomponenten ist gemäß einem Kerngedanken der Erfindung in den Tankvorrichtungen 10, 12 jeweils eine Wärmeeintragungseinrichtung zum Eintrag von Wärme in das Druckfluid 19, 21 vorhanden. In dem nicht beanspruchten Ausführungsbeispiel gemäß Fig. 1 sind die Wärmeeintragungseinrichtungen in den separaten Druckräumen 18, 20 angeordnet. Dabei umfassen die Wärmeeintragungseinrichtungen jeweils eine Heizeinrichtung 26, 28, die beispielsweise zum Betrieb mit elektrischer Energie und/oder nuklearer Energie ausgebildet sein können. Dies stellt eine robuste und wenig komplexe Ausbildung der Wärmeeintragungseinrichtungen dar.

Die Wärmeeintragungseinrichtung dient zur Einstellung des Druckniveaus innerhalb der Tankvorrichtungen 10, 12 bzw. der Speicherräume 14, 16 im Betrieb über den Wärmeeintrag. Zu diesem Zweck sind an den Tankvorrichtungen 10, 12, insbesondere in Kontakt zu den Speicherräumen 14, 16 und/oder in den Druckräumen 18, 20, geeignete Sensorvorrichtungen 34 bis 37, insbesondere Druck- und/oder Temperatursensoren, vorhanden. Im Betrieb wird der Wärmeeintrag mittels der Wärmeeintragungseinrichtung in die Druckräume 18, 20 derart gesteuert bzw. geregelt, dass sich innerhalb der Speicherräume 14, 16 das gewünschte Druckniveau einstellt. Das Druckniveau entspricht beispielsweise einem Druck bzw. Druckbereich zur Förderung des Oxidators 11 bzw. des Brennstoffes 13 in die Brennkammer 72. Eine weitere Fördereinrichtung innerhalb der Entnahmeleitungen 52, 54 ist nicht erforderlich. Insbesondere kann das Druckniveau bei Entnahme der Treibstoffkomponenten mittels einer Steuerung bzw. Regelung konstant gehalten werden. Auf diese Weise lässt sich der entnommene Mengenstrom an Brennstoff 13 und/oder Oxidator 11 mittels der Wärmeeintragungseinrichtungen bzw. dem Wärmeeintrag unter Zuhilfenahme der Steuereinrichtung gezielt steuern bzw. regeln.

Das Druckniveau kann so eingestellt werden, dass der Brennstoff 13 und/oder der Oxidator 11 gezielt flüssig und/oder gasförmig aus dem jeweiligen Speicherraum 16, 18 entnommen wird.

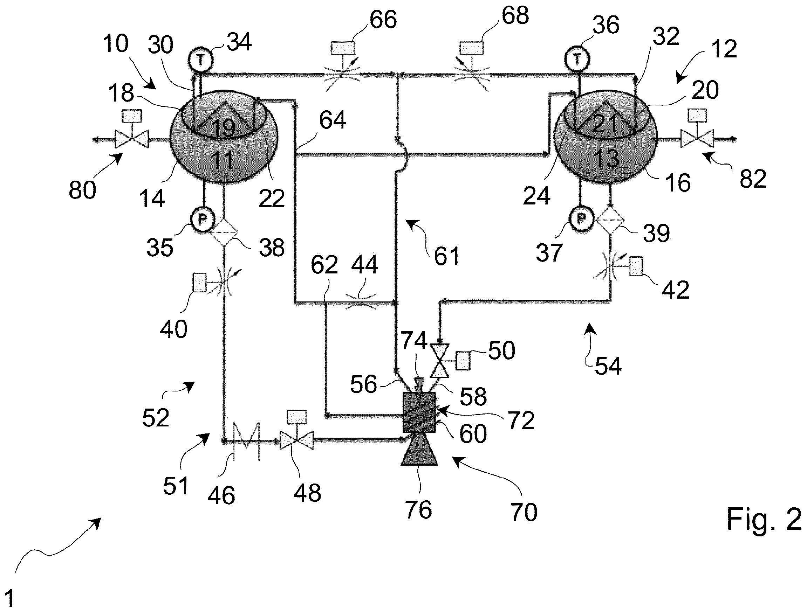

Fig. 2 zeigt ein Fließschema einer weiteren Ausführungsvariante des Antriebssystems 1 gemäß Fig. 1. Dabei umfassen die Wärmeeintragungseinrichtungen in den Druckräumen 18, 20 jeweils eine Wärmetauscheinrichtung 30, 32, ohne Heizeinrichtungen 26, 28. Die Wärmetauscheinrichtungen 30, 32 sind in einem Wärmetauscherkreislauf 61 des Antriebssystems 1 angeordnet, der im Betrieb vorliegend beispielhaft von der innerhalb der Regenerativkühlung verwendeten Treibstoffkomponente, hier dem Oxidator 11, als Wärmeträgerfluid durchströmt wird. Die Kühleinrichtung 60 dient als Wärmequelle des Wärmetauscherkreislaufs 61.

Stromab der Kühleinrichtung 60 befindet sich ein Verteiler 62 zur Aufteilung der Leitungsmittel bzw. des Oxidatorstroms. Der Verteiler 62 umfasst z. B. eine Leitungsverzweigung und/oder ein (Mehrwege-)Ventil. Mittels des Verteilers 62 wird im Betrieb ein Anteil an Oxidator in den Wärmetauscherkreislauf 61 zur Wärmeübertragung an das jeweilige Druckfluid 19, 21 geleitet. Der andere Anteil wird an den Zufuhrabschnitt 56 und darüber an die Antriebsvorrichtung 70 geleitet. Das Verhältnis der Anteile ist mittels eines stromab des Verteilers 62, in dem zur Antriebsvorrichtung 70 führenden Leitungsabschnitt, angeordneten Stellmittels 44 einstellbar. Das Stellmittel 44 ist in einer robusten, kostengünstigen Variante z. B. als Blende ausgeführt. Alternativ kann das Stellmittel 44 z. B. als Hochtemperatur-Regelventil ausgebildet sein.

Stromab des Verteilers 62 ist in dem Wärmetauscherkreislauf 61 ein weiterer Verteiler 64 vorhanden. Der Verteiler 64 teilt die Leitungsmittel bzw. den Oxidator in Funktion als Wärmeträgerfluid auf, auf einen Anteil zum Durchströmen der ersten Wärmetauscheinrichtung 30 und einen Anteil zum Durchströmen der zweiten Wärmetauscheinrichtung 32.

Stromab der Wärmetauscheinrichtungen 30, 32 ist in dem Wärmetauscherkreislauf 61 beispielhaft jeweils ein Stellmittel 66 bzw. 68 zur Einstellung des Mengenstroms durch die Wärmetauscheinrichtungen 30, 32 angeordnet. Die Stellmittel 66, 68 können beispielsweise durch Regelventile gebildet sein. So lässt sich eine Steuerung bzw. Regelung des Wärmeeintrags mittels der Wärmetauscheinrichtungen 30, 32 bereitstellen, mittels der das Druckniveau, insbesondere der Förderdruck, in den Speicherräumen 14, 16 bei einer kontinuierlichen Entnahme der Treibstoffkomponenten konstant gehalten werden kann. Die Anordnung stromab der Wärmetauscheinrichtungen 30, 32 ist insofern vorteilhaft, als die Temperatur des Wärmeträgerfluids geringer ist als stromauf der Wärmetauscheinrichtung 30, 32. Auf diese Weise können kostengünstigere, nicht hochtemperaturfeste Steuermittel 66, 68 verwendet werden. Bei Vorhandensein der Stellmittel 66, 68 kann, zugunsten eines weniger komplexen Aufbaus des Antriebssystems 1, auf die Stellmittel 40, 42 innerhalb der Entnahmeleitungen 52, 54 verzichtet werden.

Stromab der Stellmittel 66, 68 werden die aufgeteilten Leitungsmittel innerhalb des Wärmetauscherkreislaufes 61 wieder zusammengeführt. Der Wärmetauscherkreislauf 61 mündet in die Leitungsmittel, die mittels des Verteilers 62 abgezweigt wurden, wieder zur Bildung der gemeinsamen Entnahmeleitung 52, die in dem Zufuhrabschnitt 56 zur Zufuhr an die Antriebsvorrichtung 70 mündet.

Vorteilhaft an der in Fig. 2 gezeigten Variante ist die Verwendung der Antriebsvorrichtung 70 als Wärmequelle, wodurch die Gesamteffizienz des Antriebssystems 1 erhöht wird.

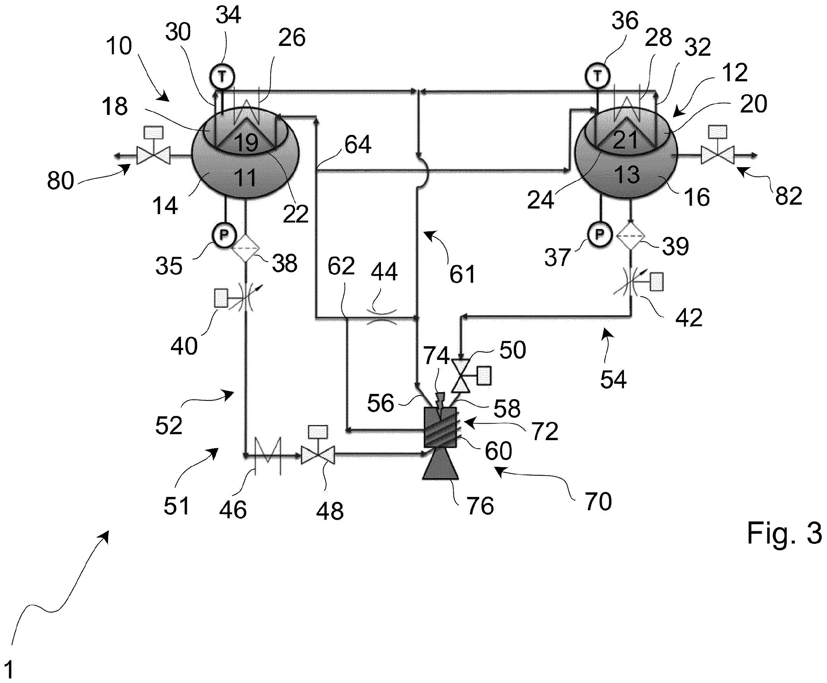

Fig. 3 zeigt ein Fließschema einer weiteren Variante des Antriebssystems 1, basierend auf dem in Fig. 2 gezeigten Antriebssystem 1. Bei dieser Variante weist die Wärmeeintragungseinrichtung sowohl die Heizeinrichtungen 26, 28 (vgl. auch Fig. 1) als auch in dem Wärmetauscherkreislauf 61 angeordnete Wärmetauscheinrichtungen 30, 32 (vgl. auch Fig. 2) auf. Die optionalen Stellmittel 66, 68 (vgl. Fig. 2) sind bei dieser Variante nicht vorhanden. Der Mengenstrom durch die Wärmetauscheinrichtungen 30, 32 zur Steuerung bzw. Regelung des Wärmeeintrags mittels der Wärmetauscheinrichtungen 30, 32 ist mittels der in den Entnahmeleitungen 52, 54 vorhandenen Stellmittel 40, 42 und/oder 48, 50, und/oder des Stellmittels 44 innerhalb des Wärmetauscherkreislaufs 61 einstellbar, d. h. steuer- bzw. regelbar.

Durch die Kombination der Heizeinrichtungen 26 bzw. 28 und der Wärmetauscheinrichtung 30 bzw. 32 innerhalb der Wärmeeintragungseinrichtung lässt sich ein weiter Mengenstrombereich der Treibstoffkomponenten steuern bzw. regeln und damit ein weiter Schubbereich durch die Antriebsvorrichtung 70 abdecken. Zudem kann eine gleichmäßige Treibstoffversorgung der Antriebsvorrichtung 70 gewährleistet werden. So kann beispielsweise während einer Startphase der Antriebsvorrichtung 70, innerhalb der die Brennkammer 72 noch keine Abwärme erzeugt und somit nicht als Wärmequelle fungieren kann, der Wärmeeintrag mittels der Heizeinrichtungen 26, 28 erfolgen. Während eines stationären Betriebs der Antriebsvorrichtung 70 kann der Wärmeeintrag in die Speicherräume 18, 20 zumindest teilweise mittels der Wärmetauscheinrichtungen 30, 32 und somit zumindest teilweise unabhängig von äußerer Energieversorgung erfolgen..

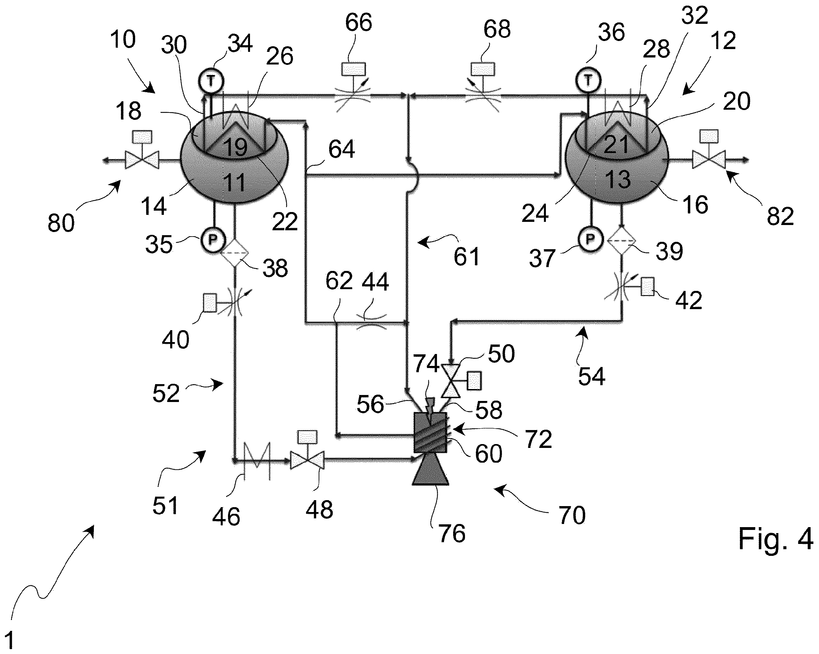

Fig. 4 zeigt eine weitere Ausbildungsvariante des Antriebssystems 1. Diese Ausbildungsvariante basiert auf dem Antriebssystem 1 gemäß Fig. 3 und umfasst zudem die in Fig. 2 vorhandenen Stellmittel 66, 68, insbesondere in Ausbildung als Regelventile.

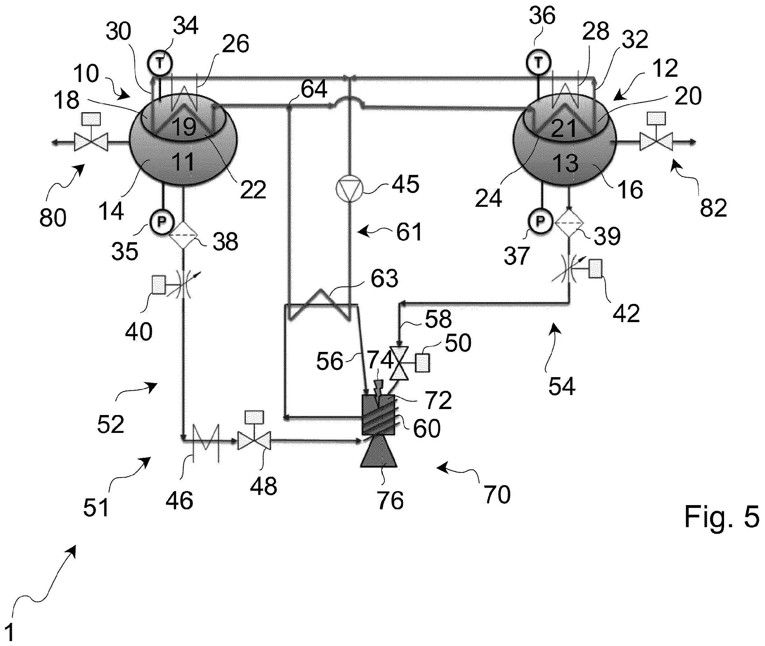

Fig. 5 zeigt eine weitere Ausbildungsvariante des Antriebssystems 1 basierend auf dem Antriebssystem gemäß Fig. 3 oder 4. Im Unterschied zu dem in Fig. 3 oder 4 gezeigten Antriebssystem 1 ist bei dieser Variante der Wärmetauscherkreislauf 61 strömungsmechanisch von der Entnahmeanordnung 51 entkoppelt. Dabei wird nicht Oxidator 11 und/oder Brennstoff 13 als Wärmeträgerfluid, sondern ein separates Wärmeträgerfluid verwendet. Vorteilhaft ist die einfache Steuerbarkeit bzw. Regelbarkeit des Wärmeeintrags über die Wärmetauscheinrichtungen 30, 32 in das Druckfluid 19, 21.

Zur thermischen Kopplung des Wärmetauscherkreislaufes 61 mit der Antriebsvorrichtung 70 bzw. Brennkammer 72 als Wärmequelle ist eine separate Wärmetauscheinrichtung 63 vorhanden. Die Wärmetauscheinrichtung 63 ist bezüglich der Entnahmeanordnung 51 stromab der Kühleinrichtung 60 und stromauf des Zufuhrabschnitts 56 angeordnet. Bezüglich des Wärmetauscherkreislaufes 61 ist die Wärmetauscheinrichtung 63 stromauf der Wärmetauscheinrichtungen 30, 32 angeordnet.

Zur Förderung des Wärmeträgerfluids ist in dem Wärmetauscherkreislauf 61 eine separate Fördereinrichtung 45 angeordnet. Die Fördereinrichtung 45 befindet sich zweckmäßigerweise in einem Gesamtleitungsabschnitt des Wärmetauscherkreislaufs 61, beispielsweise stromab der Wärmetauscheinrichtung 30 (oder 32) und stromauf der Wärmetauscheinrichtung 63, wodurch eine vergleichsweise geringe Wärmebelastung der Fördereinrichtung 45 erzielt werden kann. Alternativ kann die Fördereinrichtung 45 stromab der Wärmetauscheinrichtung 63 und stromauf des Verteilers 64 angeordnet sein.

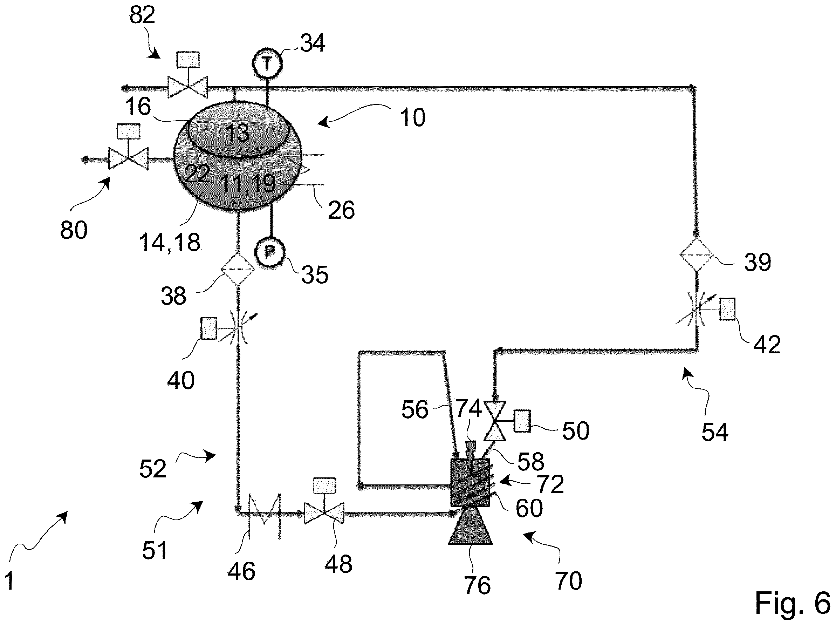

Fig. 6 zeigt eine weitere nicht beanspruchte Variante des Antriebssystems 1, wobei lediglich eine einzige Tankvorrichtung 10 vorhanden ist. Innerhalb derselben befindet sich sowohl der erste Speicherraum 14 umfassend Oxidator 11 als auch der zweite Speicherraum 16 umfassend Brennstoff 13. Die beiden Speicherräume 14, 16 sind mittels der Trennvorrichtung 22 fluiddicht voneinander getrennt, stehen jedoch durch die flexibelelastische Ausdehnbarkeit der Trennvorrichtung 22 mechanisch miteinander in Wirkverbindung. Durch diese Ausbildung wird vorteilhaft Tankstruktur und somit Masse eingespart.

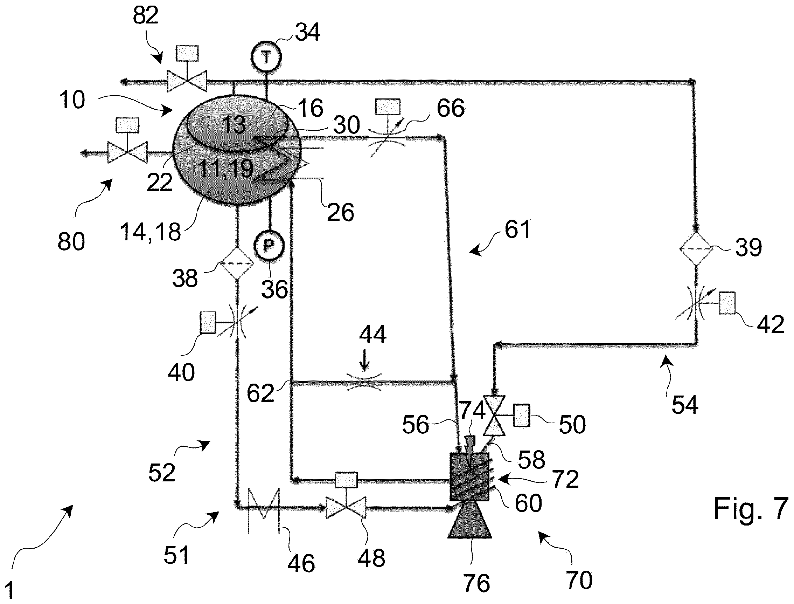

Bei der in Fig. 6 gezeigten Variante wird diejenige Treibstoffkomponente mit dem niedrigeren Dampfdruck von der Treibstoffkomponente mit dem höheren Dampfdruck bedrückt. Auf diese Weise bildet, bei Verwendung von N₂O als Oxidator 11 und C₂H₆ als Brennstoff 13, N₂O zugleich das Druckfluid 19. Die Verwendung eines separaten Druckfluids 19 und eines separaten Druckraums 18 entfällt vorteilhafterweise. Der entsprechende Speicherraum 14 bildet dabei zugleich den Druckraum 18. Dabei ist die Wärmeeintragungseinrichtung, hier beispielhaft umfassend lediglich die Heizeinrichtung 26, innerhalb des Speicherraums 14 bzw. Druckraums 18 angeordnet. Bei dieser, wie auch bei der in Fig. 7 gezeigten, Variante erfahren Brennstoff 13 und Oxidator 11 den gleichen Druck, entsprechend dem der Treibstoffkomponente mit dem höheren Dampfdruck.

Durch den Wärmeeintrag in die Treibstoffkomponente mit dem höheren Dampfdruck im Betrieb kann diese Treibstoffkomponente als Gas-Flüssigkeitsgemisch im Speicherraum 14 vorliegen. So kann es bei der Entnahme aus der Tankvorrichtung 10 zu einer Zweiphasenströmung kommen, welche mit einer Fluktuation des Mengenstroms in die Antriebsvorrichtung 70 einhergehen kann. Verhindert werden kann dies dadurch, dass die Stellmittel 40 und/oder 48 in der entsprechenden Entnahmeleitung, hier der Entnahmeleitung 52, zur Erzeugung eines ausreichend hohen Druckverlusts zur Vergleichmäßigung des Mengenstrom ausgelegt sind. Alternativ oder zusätzlich können etwaige flüssige Bestandteile mittels der Heizeinrichtung 46 innerhalb der Entnahmeleitung 52 verdampft werden. So kann durch eine Kombination eines entsprechenden Druckverlusts und/oder der Heizeinrichtung 46, gegebenenfalls auch in Kombination mit der vorgesehenen Regenerativkühlung umfassend die Kühleinrichtung 60, das Vorliegen einer vollständig gasförmigen, gleichmäßigen Strömung sicherstellen. Die andere Treibstoffkomponente, mit dem niedrigeren Dampfdruck, liegt in der Regel in der Flüssigphase vor.

Fig. 7 zeigt eine Variante des in Fig. 6 gezeigten Antriebssystems 1, wobei im Unterschied dazu die Wärmeeintragungseinrichtung um die Wärmetauscheinrichtung 30 ergänzt ist. Auf diese Weise ist, ähnlich wie beispielsweise in Fig. 4, bei der Wärmeeintragungseinrichtung die Heizeinrichtung 26 mit der Wärmetauscheinrichtung 30 kombiniert. Das in Fig. 7 gezeigte Antriebssystem 1 umfasst ebenfalls den Wärmetauscherkreislauf 61 sowie das Stellmittel 44, beispielsweise in Form einer Blende, und, optional, das Stellmittel 66, beispielsweise in Ausbildung als Regelventil.

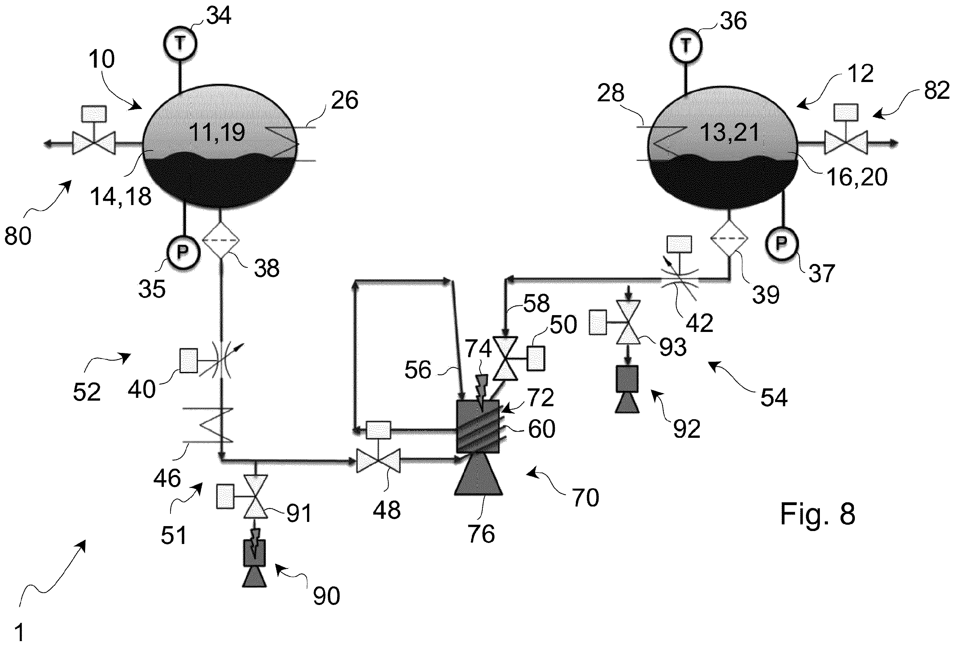

Fig. 8 zeigt eine weitere nicht beanspruchte Ausbildungsvariante des Antriebssystems 1, wobei zwei Tankvorrichtungen 10, 12 vorhanden sind, die jeweils keinen separaten Druckraum 18, 20, d. h. keine mechanische Trennung zwischen Speicherraum 14, 16 und Druckraum 18, 20, umfassen. Dabei bildet jeweils der Speicherraum 14, 16 auch den Druckraum 18, 20. Die Wärmeeintragungseinrichtung, hier beispielhaft lediglich umfassend die Heizeinrichtung 26, 28, ist innerhalb der Speicherräume 14, 16 angeordnet. Die Bedrückung erfolgt durch Wärmeeintrag in die jeweilige Treibstoffkomponente, die somit zugleich jeweils das Druckfluid 19, 21 bildet. Die Wärmeeintragungseinrichtung kann wie in Fig. 4 und alternativ Fig. 5 um eine Wärmetauscheinrichtung 30, 32 ergänzt werden.

Die in Fig. 8 gezeigt Ausbildungsvariante des Antriebssystems 1 umfasst zumindest eine, hier beispielhaft zwei weitere Antriebsvorrichtungen 90, 92. Die Antriebsvorrichtung 90 ist in Strömungsverbindung mit der Entnahmeleitung 52 zur Durchströmung mit Oxidator 11 angeordnet. Die Antriebsvorrichtung 92 ist in Strömungsverbindung mit der Entnahmeleitung 54 zur Durchströmung mit Brennstoff 13 angeordnet. Stromauf der Antriebsvorrichtungen 90, 92 sind jeweils Stellmittel 91, 93 angeordnet, um die Durchströmung der Antriebsmittel 90, 92 mit Oxidator 11 bzw. Brennstoff 13 zu steuern bzw. zu regeln.

Die zusätzlichen Antriebsvorrichtungen 90, 92 sind vorzugsweise als Kaltgasantriebe ausgebildet. Bei der, mit Oxidator durchströmbaren, Antriebsvorrichtung 90 ist auch ein katalytische Antriebsvorrichtung 90 einsetzbar, wobei ein insbesondere vorgeheizter Katalysator eine Zersetzung des N₂O innerhalb der Antriebsvorrichtung 90 zur Schuberzeugung bewirkt. Im Betrieb kann jeweils ein kleiner Anteil an Oxidator 11 bzw. Brennstoff 13 den Antriebsvorrichtungen 90 bzw. 92 zugeführt und darin zum Antrieb entspannt und/oder katalytisch umgesetzt werden. Die Antriebsvorrichtungen 90, 92 können z. B. kleinen Lageänderungen des Raumfahrzeugs bzw. des Satelliten dienen.

Weiterhin können die Antriebsvorrichtungen 90, 92 zu einer definierten Entnahme der Treibstoffkomponente beitragen. In der in Fig. 8 gezeigten Ausbildungsvariante liegen durch die Selbstbedrückung die jeweiligen Treibstoffkomponenten in der Regel zweiphasig, insbesondere flüssig und gasförmig, in den Tankvorrichtungen 10, 12 vor. Aufgrund der nicht vorhandenen Schwerkraft im Weltraum kann das Gemisch ungerichtet und/oder gemischt in den Speicherräumen 14, 16 vorliegen. Bei der Entnahme kann nun eine Zweiphasenströmung in die Antriebsvorrichtung 70 gelangen, was zu undefinierten Mengenströmen führen kann. Für eine definierte Entnahme kann zunächst jeweils ein geringerer, zur Schuberzeugung der Antriebsvorrichtungen 90, 92 ausreichender, Teil des Oxidators 11 und/oder des Brennstoffes 13 in einer der oder beiden Antriebsvorrichtungen 90, 92 entspannt werden. Der Schub führt zum Absetzen des flüssigen Teils der jeweiligen Treibstoffkomponente innerhalb der Speicherräume 14, 16. Bei entsprechend in Relation zu den Antriebsvorrichtungen 90, 92 angeordneten Entnahmestellen der Entnahmeleitungen 52, 54 an den jeweiligen Speicherräumen 14, 16 kann nun gezielt die jeweilige Treibstoffkomponente als Flüssigphase oder, bei entsprechend anderer Anordnung, als Gasphase entnommen werden.

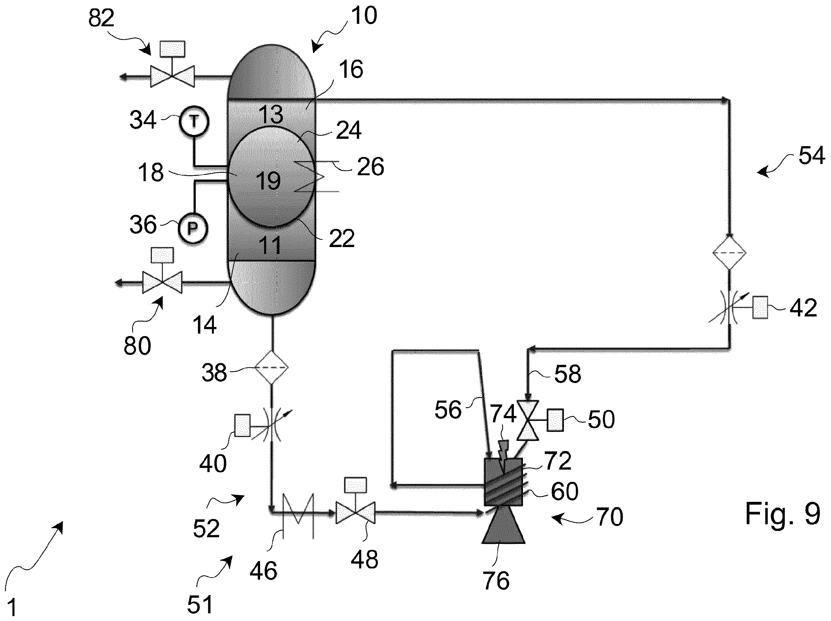

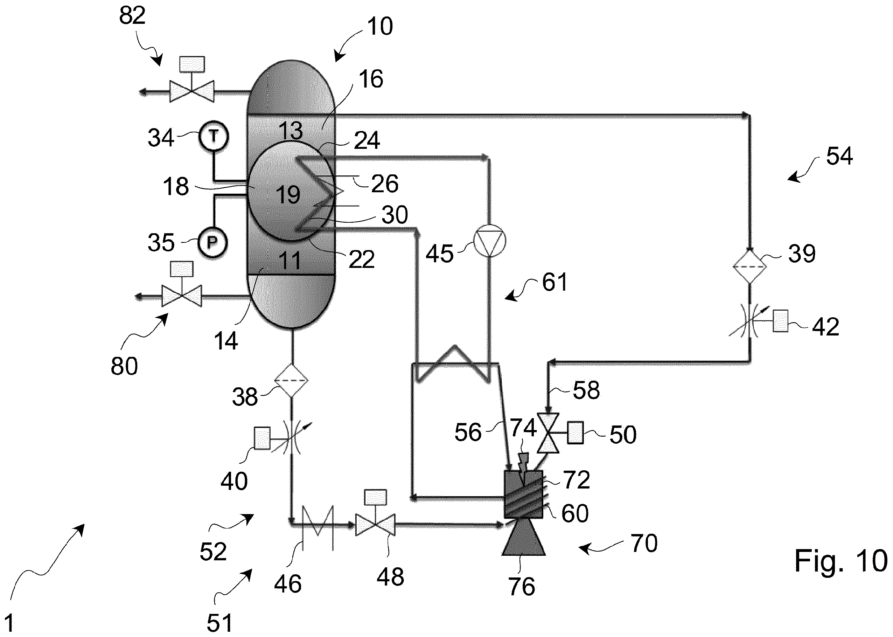

Fig. 9 (nicht beansprucht) und 10 zeigen eine weitere Ausführungsvariante des Antriebssystems 1, wobei lediglich eine einzige Tankvorrichtung 10 vorhanden ist, die zwei Speicherräume 14, 16 sowie einen separaten Druckraum 18 umfasst. Bei der in Fig. 9 nicht beanspruchten gezeigten Variante umfasst die Wärmeeintragungseinrichtung lediglich die Heizeinrichtung 26. Bei der in Fig. 10 gezeigten Variante umfasst die Wärmeeintragungseinrichtung sowohl die Heizeinrichtung 26 als auch die Wärmetauscheinrichtung 30. Die Wärmetauscheinrichtung 30 ist dabei beispielhaft in einem strömungsmechanisch von der Entnahmeanordnung 51 entkoppelten Wärmetauscherkreislauf 61 angeordnet (vgl. z. B. Fig. 5), kann aber auch wie z. B. in Fig. 7 dargestellt ausgeführt werden.

In dem Druckraum 18 ist in der betriebsbereiten Ausbildung ein separates Druckfluid 19, beispielsweise CO₂, angeordnet. Der Druckraum 18 steht in Wirkverbindung zur Bedrückung der jeweiligen Speicherräume 14, 16 umfassend Oxidator 11 bzw. Brennstoff 13. In einer bauraumoptimierten Anordnung sind beispielsweise die Speicherräume 14, 16 an den jeweiligen Stirnseiten der Tankvorrichtung 10 und ist der Druckraum 18 zwischen diesen liegend angeordnet. Bei dieser Variante erfahren Brennstoff 13 und Oxidator 11 den gleichen Druck durch das Druckfluid 19, was die Steuerung bzw. Regelung erleichtert.

Zusammenfassend erlaubt das erfindungsgemäße Antriebssystem 1 eine effiziente, äußerst flexible Steuerung bzw. Regelung zur Förderung der Treibstoffkomponenten an die Antriebsvorrichtung 70.

## Patentansprüche

1. Antriebssystem (1) für ein Raumfahrzeug, mit
- zumindest einer ersten Antriebsvorrichtung (70), die mit N₂O als Oxidator (11) und mit einem Kohlenwasserstoff als Brennstoff (13) betreibbar ist,
- einer ersten Tankvorrichtung (10) umfassend zumindest einen ersten Speicherraum (14) zur Speicherung des Oxidators (11) und/oder Brennstoffes (13) sowie einen ersten Druckraum (18) zur Aufnahme eines Druckfluids (19) zur Aufrechterhaltung eines Druckniveaus innerhalb des ersten Speicherraums (14), und
- einem zweiten Speicherraum (16) zur Speicherung des Brennstoffes (13) und/oder Oxidators (11),
- einer Entnahmeanordnung (51) umfassend Leitungsmittel, mittels der der erste Speicherraum (14) und der zweite Speicherraum (16) mit der ersten Antriebsvorrichtung (70) zur Versorgung mit Oxidator (11) und/oder Brennstoff (13) in Strömungsverbindung steht,
wobei
- in thermischer Wirkverbindung mit dem ersten Druckraum (18) zumindest eine Wärmeeintragungseinrichtung zum Eintrag von Wärme in das Druckfluid angeordnet ist,
- die Wärmeeintragungseinrichtung zumindest eine Wärmetauscheinrichtung (30, 32) umfasst, die in einem Wärmetauscherkreislauf (61) des Antriebssystems (1) angeordnet ist und mit der Antriebsvorrichtung (70) als Wärmequelle in thermische Verbindung gebracht oder bringbar ist, wobei
- der Wärmetauscherkreislauf (61) derart ausgebildet ist, dass die Wärmetauscheinrichtung (30, 32) von Brennstoff (13) und/oder Oxidator (11) als Wärmeträgerfluid durchströmbar ist, wobei der Wärmetauscherkreislauf (61) entsprechend angeordnete Leitungsmittel und zumindest ein Stellmittel (44, 66) umfasst, und
die Wärmetauscheinrichtung (30, 32) mittels des Stellmittels (44, 66) vermittels einer Steuereinrichtung von einem steuerbaren und/oder regelbaren Anteil an Brennstoff (13) und/ oder Oxidator (11) durchströmbar ist,
**dadurch gekennzeichnet,**
**dass** die Wärmetauscheinrichtung (30, 32) der Wärmeeintragungseinrichtung in dem ersten Druckraum (18) angeordnet ist.

2. Antriebssystem (1) für ein Raumfahrzeug, mit
- zumindest einer ersten Antriebsvorrichtung (70), die mit N₂O als Oxidator (11) und mit einem Kohlenwasserstoff als Brennstoff (13) betreibbar ist,
- einer ersten Tankvorrichtung (10) umfassend zumindest einen ersten Speicherraum (14) zur Speicherung des Oxidators (11) und/oder Brennstoffes (13) sowie einen ersten Druckraum (18) zur Aufnahme eines Druckfluids (19) zur Aufrechterhaltung eines Druckniveaus innerhalb des ersten Speicherraums (14), und
- einem zweiten Speicherraum (16) zur Speicherung des Brennstoffes (13) und/oder Oxidators (11),
- einer Entnahmeanordnung (51) umfassend Leitungsmittel, mittels der der erste Speicherraum (14) und der zweite Speicherraum (16) mit der ersten Antriebsvorrichtung (70) zur Versorgung mit Oxidator (11) und/oder Brennstoff (13) in Strömungsverbindung steht,
wobei
- in thermischer Wirkverbindung mit dem ersten Druckraum (18) zumindest eine Wärmeeintragungseinrichtung zum Eintrag von Wärme in das Druckfluid angeordnet ist,
- die Wärmeeintragungseinrichtung zumindest eine Wärmetauscheinrichtung (30, 32) umfasst, die in einem Wärmetauscherkreislauf (61) des Antriebssystems (1) angeordnet ist und mit der Antriebsvorrichtung (70) als Wärmequelle in der Weise in thermische Verbindung gebracht oder bringbar ist, dass der Wärmetauscherkreislauf (61) von der Entnahmeanordnung (51) strömungsmechanisch entkoppelt ausgebildet ist, wobei zur Wärmeauskopplung aus dem Brennstoff (13) und/oder Oxidator (11) eine separate Wärmetauscheinrichtung (63) in dem Wärmetauscherkreislauf (61) angeordnet ist, **dadurch gekennzeichnet,**
**dass** die Wärmetauscheinrichtung (30, 32) der Wärmeeintragungseinrichtung in dem ersten Druckraum (18) angeordnet ist.

3. Antriebssystem (1) nach einem der Ansprüche 1 oder 2,
**dadurch gekennzeichnet,**
**dass** in dem Wärmetauscherkreislauf (61) stromab der Wärmetauscheinrichtung (30, 32) ein Regelventil angeordnet ist.

4. Antriebssystem (1) nach einem der vorhergehenden Ansprüche,
**dadurch gekennzeichnet,**
**dass** die Wärmeeintragungseinrichtung zumindest eine Heizeinrichtung (26, 28) umfasst, die insbesondere zum Betrieb mit elektrischer Energie und/oder nuklearer Energie ausgebildet ist.

5. Antriebssystem (1) nach einem der vorhergehenden Ansprüche,
**dadurch gekennzeichnet,**
**dass** eine zweite Tankvorrichtung (12) vorhanden ist, in welcher der zweite Speicherraum (16) und ein zweiter Druckraum (20) zur Aufnahme eines Druckfluids (21) zur Aufrechterhaltung eines Druckniveaus innerhalb des zweiten Speicherraums (16) angeordnet sind oder
**dass** der zweite Speicherraum (16) innerhalb der ersten Tankvorrichtung (10) angeordnet ist, wobei der erste Druckraum (18) sowohl zur Aufrechterhaltung des Druckniveaus innerhalb des ersten Speicherraums (14) als auch des zweiten Speicherraums (16) angeordnet und ausgebildet ist.

6. Antriebssystem (1) nach Anspruch 5,
**dadurch gekennzeichnet,**
**dass** einer der Speicherräume (14, 16) einen der Druckräume (16,18) bildet oder
**dass** zumindest ein Druckraum (18, 20) zusätzlich zu den Speicherräumen (14, 16) innerhalb der Tankvorrichtung (10) vorhanden ist.

7. Antriebssystem (1) nach einem der vorhergehenden Ansprüche,
**dadurch gekennzeichnet,**
**dass** innerhalb der ersten und/oder der zweiten Tankvorrichtung (10, 12) der jeweilige Druckraum (18, 20) von dem Speicherraum (14, 16) mittels einer elastisch-flexiblen Trennvorrichtung (22, 24), insbesondere einer Membran, fluiddicht getrennt ist und/oder
**dass** mit zumindest einer der Entnahmeleitungen (52, 54) eine Heizeinrichtung (46) in thermischer Wirkverbindung angeordnet ist.

8. Antriebssystem (1) nach einem der vorhergehenden Ansprüche,
**dadurch gekennzeichnet,**
**dass** das Druckfluid (19, 21) durch Kohlendioxid und/oder durch eine der Treibstoffkomponenten Brennstoff (13) oder Oxidator (11) gebildet ist.

9. Antriebssystem (1) nach einem der vorhergehenden Ansprüche,
**dadurch gekennzeichnet,**
**dass** eine weitere Antriebsvorrichtung (90), insbesondere umfassend einen Kaltgasantrieb und/oder einen katalytischen Antrieb, vorhanden ist.

10. Verfahren zum Betreiben eines Antriebssystems (1) nach einem der vorhergehenden Ansprüche.

11. Verfahren nach Anspruch 10,
**dadurch gekennzeichnet,**
**dass** das Druckfluid (19, 21) innerhalb des Drucktanks zumindest zeitweise zumindest teilweise in flüssigem Aggregatszustand vorliegt und/oder dass der Brennstoff (13) und/oder der Oxidator (11) flüssig oder gasförmig aus dem jeweiligen Speicherraum (14, 16) entnommen wird/werden.

12. Verfahren nach einem der Ansprüche 10 oder 11,
**dadurch gekennzeichnet,**
**dass** zumindest in einer Startphase eine Heizeinrichtung (26, 28) der Wärmeeintragungseinrichtung zum Wärmeeintrag verwendet wird.

13. Verfahren nach einem der Ansprüche 10 bis 12,
**dadurch gekennzeichnet,**
**dass** zunächst ein Anteil von Brennstoff (13) und/oder Oxidator (11) in einer weiteren Antriebsvorrichtung (90) zum Antrieb verwendet wird, insbesondere in einem Kaltgasantrieb entspannt oder in einem katalytischen Triebwerk zersetzt wird, und anschließend Brennstoff (13) und/oder Oxidator (11) für die Antriebsvorrichtung (70) entnommen wird.

## Claims

1. Propulsion system (1) for a spacecraft, comprising
- at least one first drive device (70) which can be operated with N₂O as the oxidizer (11) and with a hydrocarbon as the fuel (13),
- a first tank device (10) comprising at least one first storage chamber (14) for storing the oxidizer (11) and/or fuel (13) and a first pressure chamber (18) for receiving a pressurized fluid (19) for maintaining a pressure level within the first storage chamber (14), and
- a second storage chamber (16) for storing the fuel (13) and/or oxidizer (11),
- a withdrawal arrangement (51) comprising line means by means of which the first storage chamber (14) and the second storage space (16) are flow-connected to the first drive device (70) for the supply of oxidizer (11) and/or fuel (13),
wherein
- at least one heat input device for inputting heat into the pressurized fluid is arranged so as to be in thermal operative connection with the first pressure chamber (18),
- the heat input device comprises at least one heat exchange device (30, 32) which is arranged in a heat exchanger circuit (61) of the propulsion system (1) and is or can be brought into thermal connection with the drive device (70) as a heat source, wherein
- the heat exchanger circuit (61) is designed in such a way that fuel (13) and/or oxidizer (11) can flow through the heat exchange device (30, 32) as a heat transfer fluid, wherein the heat exchanger circuit (61) comprises correspondingly arranged line means and at least one actuating means (44, 66), and
a controllable and/or regulatable proportion of fuel (13) and/or oxidizer (11) can flow through the heat exchange device (30, 32) by means of the actuating means (44, 66), by means of a control device,
**characterized in that**
the heat exchange device (30, 32) of the heat input device is arranged in the first pressure chamber (18).

2. Propulsion system (1) for a spacecraft, comprising
- at least one first drive device (70) which can be operated with N₂O as the oxidizer (11) and with a hydrocarbon as the fuel (13),
- a first tank device (10) comprising at least one first storage chamber (14) for storing the oxidizer (11) and/or fuel (13) and a first pressure chamber (18) for receiving a pressurized fluid (19) for maintaining a pressure level within the first storage chamber (14), and
- a second storage chamber (16) for storing the fuel (13) and/or oxidizer (11),
- a withdrawal arrangement (51) comprising line means by means of which the first storage chamber (14) and the second storage space (16) are flow-connected to the first drive device (70) for the supply of oxidizer (11) and/or fuel (13),
wherein
- at least one heat input device for inputting heat into the pressurized fluid is arranged so as to be in thermal operative connection with the first pressure chamber (18),
- the heat input device comprises at least one heat exchange device (30, 32) which is arranged in a heat exchanger circuit (61) of the propulsion system (1) and is or can be brought into thermal connection with the drive device (70) as a heat source in such a way that the heat exchanger circuit (61) is designed to be fluidically decoupled from the withdrawal arrangement (51), wherein a separate heat exchange device (63) is arranged in the heat exchanger circuit (61) for heat extraction from the fuel (13) and/or oxidizer (11), **characterized in that** the heat exchange device (30, 32) of the heat input device is arranged in the first pressure chamber (18).

3. Propulsion system (1) according to either claim 1 or claim 2,
**characterized in that**
a control valve is arranged in the heat exchanger circuit (61) downstream of the heat exchange device (30, 32).

4. Propulsion system (1) according to any of the preceding claims,
**characterized in that**
the heat input device comprises at least one heating device (26, 28) which is designed in particular to operate with electrical energy and/or nuclear energy.

5. Propulsion system (1) according to any of the preceding claims,
**characterized in that**
a second tank device (12) is present, in which the second storage chamber (16) and a second pressure chamber (20) for receiving a pressurized fluid (21) for maintaining a pressure level within the second storage chamber (16) are arranged, or **in that** the second storage chamber (16) is arranged within the first tank device (10), the first pressure chamber (18) being arranged and designed to maintain the pressure level within both the first storage chamber (14) and the second storage chamber (16).

6. Propulsion system (1) according to claim 5,
**characterized in that**
one of the storage chambers (14, 16) forms one of the pressure chambers (16, 18) or
at least one pressure chamber (18, 20) is present in addition to the storage chambers (14, 16) within the tank device (10).

7. Propulsion system (1) according to any of the preceding claims,
**characterized in that**
within the first and/or the second tank device (10, 12) the relevant pressure chamber (18, 20) is separated from the storage chamber (14, 16) in a fluid-tight manner by means of an elastic-flexible separating device (22, 24), in particular a membrane, and/or
a heating device (46) is arranged so as to be in thermal operative connection with at least one of the withdrawal lines (52, 54).

8. Propulsion system (1) according to any of the preceding claims,
**characterized in that**
the pressurized fluid (19, 21) is formed by carbon dioxide and/or by one of the propellant components fuel (13) or oxidizer (11).

9. Propulsion system (1) according to any of the preceding claims,
**characterized in that**
a further drive device (90) is present, in particular comprising a cold gas drive and/or a catalytic drive.

10. Method for operating a propulsion system (1) according to any of the preceding claims.

11. Method according to claim 10,
**characterized in that**
the pressurized fluid (19, 21) within the pressure tank is at least partially in the liquid aggregate state at least at times and/or
the fuel (13) and/or the oxidizer (11) is/are withdrawn in liquid or gaseous form from the relevant storage chamber (14, 16).

12. Method according to either claim 10 or claim 11,
**characterized in that**
at least in a starting phase a heating device (26, 28) of the heat input device is used for heat input.

13. Method according to any of claims 10 to 12,
**characterized in that**
first a proportion of fuel (13) and/or oxidizer (11) is used in a further drive device (90) for the drive, and in particular is expanded in a cold gas drive or decomposed in a catalytic engine, and then fuel (13) and/or oxidizer (11) for the drive device (70) is withdrawn.

## Revendications

1. Système de propulsion (1) pour un engin spatial, comportant
- au moins un premier dispositif de propulsion (70), lequel peut fonctionner avec du N₂O en tant que comburant (11) et avec un hydrocarbure en tant que combustible (13),
- un premier dispositif de réservoir (10) comprenant au moins un premier espace de stockage (14) pour le stockage du comburant (11) et/ou du combustible (13) ainsi qu'un premier espace de pression (18) pour la réception d'un fluide sous pression (19) pour le maintien d'un niveau de pression à l'intérieur du premier espace de stockage (14), et
- un second espace de stockage (16) pour le stockage du combustible (13) et/ou du comburant (11),
- un agencement d'évacuation (51) comprenant des moyens de conduite au moyen desquels le premier espace de stockage (14) et le second espace de stockage (16) sont en liaison par écoulement avec le premier dispositif de propulsion (70) pour l'alimentation en comburant (11) et/ou en combustible (13),
dans lequel
- au moins un appareil d'apport de chaleur pour l'apport de chaleur dans le fluide sous pression est disposé en liaison fonctionnelle thermique avec le premier espace de pression (18),
- l'appareil d'apport de chaleur comprend au moins un appareil d'échange de chaleur (30, 32), lequel est disposé dans un circuit échangeur de chaleur (61) du système de propulsion (1) et est ou peut être amené en liaison thermique avec le dispositif de propulsion (70) en tant que source de chaleur,
- le circuit échangeur de chaleur (61) est conçu de telle sorte que l'appareil d'échange de chaleur (30, 32) peut être traversé par du combustible (13) et/ou du comburant (11) en tant que fluide caloporteur, dans lequel le circuit échangeur de chaleur (61) comprend des moyens de conduite disposés de manière correspondante et au moins un moyen de réglage (44, 66), et
l'appareil d'échange de chaleur (30, 32) peut être traversé par une proportion commandable et/ou régulable de combustible (13) et/ou de comburant (11) au moyen du moyen de réglage (44, 66) et au moyen d'un appareil de commande,
**caractérisé en ce**
**que** l'appareil d'échange de chaleur (30, 32) de l'appareil d'apport de chaleur est disposé dans le premier espace de pression (18).

2. Système de propulsion (1) pour un engin spatial, comportant
- au moins un premier dispositif de propulsion (70), lequel peut fonctionner avec du N₂O en tant que comburant (11) et avec un hydrocarbure en tant que combustible (13),
- un premier dispositif de réservoir (10) comprenant au moins un premier espace de stockage (14) pour le stockage du comburant (11) et/ou du combustible (13) ainsi qu'un premier espace de pression (18) pour la réception d'un fluide sous pression (19) pour le maintien d'un niveau de pression à l'intérieur du premier espace de stockage (14), et
- un second espace de stockage (16) pour le stockage du combustible (13) et/ou du comburant (11),
- un agencement d'évacuation (51) comprenant des moyens de conduite au moyen desquels le premier espace de stockage (14) et le second espace de stockage (16) sont en liaison par écoulement avec le premier dispositif de propulsion (70) pour l'alimentation en comburant (11) et/ou en combustible (13),
dans lequel
- au moins un appareil d'apport de chaleur pour l'apport de chaleur dans le fluide sous pression est disposé en liaison fonctionnelle thermique avec le premier espace de pression (18),
- l'appareil d'apport de chaleur comprend au moins un appareil d'échange de chaleur (30, 32), lequel est disposé dans un circuit échangeur de chaleur (61) du système de propulsion (1) et est amené ou peut être amené en liaison thermique avec le dispositif de propulsion (70) en tant que source de chaleur de telle sorte que le circuit échangeur de chaleur (61) est conçu de manière à être découplé de l'agencement d'évacuation (51) selon la mécanique des fluides, dans lequel un appareil d'échange de chaleur (63) séparé est disposé dans le circuit échangeur de chaleur (61) pour l'extraction de chaleur du combustible (13) et/ou du comburant (11),
**caractérisé en ce**
**que** l'appareil d'échange de chaleur (30, 32) de l'appareil d'apport de chaleur est disposé dans le premier espace de pression (18).

3. Système de propulsion (1) selon l'une des revendications 1 ou 2,
**caractérisé en ce**
**qu'**une soupape de régulation est disposée dans le circuit échangeur de chaleur (61) en aval de l'appareil d'échange de chaleur (30, 32).

4. Système de propulsion (1) selon l'une quelconque des revendications précédentes,
**caractérisé en ce**
**que** l'appareil d'apport de chaleur comprend au moins un appareil de chauffage (26, 28), lequel est, en particulier conçu pour fonctionner avec de l'énergie électrique et/ou avec de l'énergie nucléaire.

5. Système de propulsion (1) selon l'une quelconque des revendications précédentes,
**caractérisé en ce**
**qu'**un second dispositif de réservoir (12) est fourni, dans lequel le second espace de stockage (16) et un second espace de pression (20) sont disposés pour la réception d'un fluide sous pression (21) pour le maintien d'un niveau de pression à l'intérieur du second espace de stockage (16), ou que le second espace de stockage (16) est disposé à l'intérieur du premier dispositif de réservoir (10), dans lequel le premier espace de pression (18) est disposé et conçu pour le maintien du niveau de pression à l'intérieur du premier espace de stockage (14) et du second espace de stockage (16).

6. Système de propulsion (1) selon la revendication 5,
**caractérisé en ce**
**que** l'un des espaces de stockage (14, 16) forme l'un des espaces de pression (16, 18) ou
**qu'**au moins un espace de pression (18, 20) est fourni en plus des espaces de stockage (14, 16) à l'intérieur du dispositif de réservoir (10).

7. Système de propulsion (1) selon l'une quelconque des revendications précédentes,
**caractérisé en ce**
**qu'**à l'intérieur du premier et/ou du second dispositif de réservoir (10, 12), l'espace de pression (18, 20) respectif est séparé de manière étanche aux fluides de l'espace de stockage (14, 16) au moyen d'un dispositif de séparation (22, 24) élastique flexible, en particulier d'une membrane, et/ou
**qu'**un appareil de chauffage (46) est disposé en liaison fonctionnelle thermique avec au moins l'une des conduites d'évacuation (52, 54).

8. Système de propulsion (1) selon l'une quelconque des revendications précédentes,
**caractérisé en ce**
**que** le fluide sous pression (19, 21) est formé par du dioxyde de carbone et/ou par l'un des composants de carburant, le combustible (13) ou le comburant (11).

9. Système de propulsion (1) selon l'une quelconque des revendications précédentes,
**caractérisé en ce**
**qu'**un autre dispositif de propulsion (90), comprenant, en particulier une propulsion à gaz froid et/ou une propulsion catalytique, est fourni.

10. Procédé permettant de faire fonctionner un système de propulsion (1) selon l'une quelconque des revendications précédentes.

11. Procédé selon la revendication 10,
**caractérisé en ce**
**que** le fluide sous pression (19, 21) à l'intérieur du réservoir sous pression est, au moins temporairement, au moins partiellement à l'état d'agrégation liquide et/ou
**que** le combustible (13) et/ou le comburant (11) sont évacués de l'espace de stockage (14, 16) respectif sous forme liquide ou gazeuse.

12. Procédé selon l'une des revendications 10 ou 11,
**caractérisé en ce**
**qu'**au moins dans une phase de démarrage, un appareil de chauffage (26, 28) de l'appareil d'apport de chaleur est utilisé pour l'apport de chaleur.

13. Procédé selon l'une quelconque des revendications 10 à 12,
**caractérisé en ce**
**qu'**une proportion de combustible (13) et/ou de comburant (11) est d'abord utilisée dans un autre dispositif de propulsion (90) pour la propulsion, en particulier détendue dans une propulsion à gaz froid ou décomposée dans un moteur catalytique, puis du combustible (13) et/ou du comburant (11) sont évacués pour le dispositif de propulsion (70).
